# EUROPÄISCHE PATENTANMELDUNG

(11) **EP 2 745 970 A1**
(43) Veröffentlichungstag der Anmeldung: **25.06.2014**
(21) Anmeldenummer: 14160652.5
(22) Anmeldetag: 01.06.2010
(51) Int. Cl.: B23F 5/16

(54) **Vorrichtung und Verfahren zum Wälzschälen von innenverzahnten Zahnrädern sowie zugehöriges Schälrad**

(30) Priorität: 10.06.2009 DE 102009025945
(62) Teilanmeldung aus: 10722365.3
(71) Anmelder: Profilator GmbH & Co. KG, 42329 Wuppertal (DE)
(72) Erfinder: Heinemann, Wolfgang, 42855 Remscheid (DE); Sobczyk, Marcel, 42653 Solingen (DE)
(74) Vertreter: Grundmann, Dirk

(57) **Zusammenfassung**

Die Erfindung betrifft eine Vorrichtung zum Verzahnen von Werkrädern (3) durch Wälzschälen mit einer drehantreibbaren Werkstückspindel (1) zur Aufnahme des insbesondere innen zu verzahnenden Werkrades (3) und mit einer drehantreibbaren Werkzeugspindel (2), die ein Schälrad (4) trägt, welches eine reguläre Zahnteilung aufweist, durch welche der Zahnabstand der Verzahnung des Werkrades (3) festgelegt ist. Um die Leistung der gattungsgemäßen Vorrichtung bzw. des gattungsgemäßen Verfahrens zu steigern und hierzu das geeignete Schälrad anzugeben, wird vorgeschlagen, dass der Abstand zumindest einiger gleichgestalteter Zähne des Schälrades (4) einem Mehrfachen der regulären Zahnteilung entspricht.

## Beschreibung

Die Erfindung betrifft eine Vorrichtung zum Verzahnen von Werkrädern durch Wälzschälen mit einer drehantreibbaren Werkstückspindel zur Aufnahme des insbesondere innen zu verzahnenden Werkrades und mit einer drehantreibbaren Werkzeugspindel, die ein Schneidzähne aufweisendes Schälrad trägt.

Die Erfindung betrifft darüber hinaus ein Verfahren zum Verzahnen von Werkrädern durch Wälzschälen, bei dem eine Werkstückspindel, die ein innen zu verzahnendes Werkrad aufnimmt, drehangetrieben wird und bei dem eine Werkzeugspindel, die ein Schneidzähne aufweisendes Schälrad trägt, in einem festen Drehzahlverhältnis zur Werkstückspindel drehangetrieben wird und bei dem das Schälrad in Achsrichtung des Werkrades durch eine Relativbewegung von Werkzeugspindel zu Werkstückspindel vorgeschoben wird.

Die Erfindung betrifft darüber hinaus ein Schälrad mit einer Vielzahl von um eine Drehachse zahnradartig angeordneten Schneidzähnen.

Eine Vorrichtung und ein Verfahren sowie ein Schälrad der vorbezeichneten Art wird in der DE 10 2007 015 357 A1 beschrieben. Das Werkrad wird von einer Werkstückspindel kontinuierlich drehangetrieben. Die Werkstückspindel ist zum Zwecke des Vorschubs entlang ihrer Achsrichtung verlagerbar. Das Schälrad, bei dem es sich um ein zahnradförmiges Werkzeug handelt, ist von einer Werkzeugspindel im Gleichlauf zum Werkrad drehangetrieben. Die Werkzeugspindel steht in einem festen, an der Maschine aber einstellbaren Achskreuzwinkel zur Werkstückspindel. Beim Vorschub, der kontinuierlich mit den kontinuierlich sich drehenden Achsen des Werkstücks und des Werkzeugs erfolgt, wird mit Hilfe von Schneidkanten, die entlang der Breitseitenkonturlinie der Schneidzähne verlaufen, Material aus dem Rohling herausgeschält. Zum Verzahnen können eine Vielzahl von Hüben hintereinander ausgeführt werden, wobei jeweils die Schnitttiefe vergrößert wird. Das Schälrad besitzt eine reguläre Zahnteilung. Auf jeder Position der Zahnteilung sitzt ein Schneidzahn, der jeweils Schneidkanten aufweist. Alle Zähne besitzen die gleiche Gestalt, so dass gleich gestaltete Zähne des Schälrades unmittelbar nebeneinander sitzen.

Die nicht vorveröffentlichte DE 10 2008 037 514 beschreibt eine Vorrichtung und ein Verfahren zum Erzeugen von Innenverzahnungen an rohrförmigen Werkzeugen. Bei der Innenverzahnung besteht das Problem einer hohen Überdeckung der sich in Eingriff befindlichen Zähne beider Verzahnungen. Um den Überdeckungsbereich zu vermindern, muss das Schälrad einen geringen Durchmesser aufweisen. Dies hat zur Folge, dass sich die Schneidleistung insgesamt vermindert. Als Folge davon muss die Drehzahl erhöht werden. Bei Werkstücken mit einer großen axialen Länge der Innenverzahnung darf darüber hinaus der Achskreuzwinkel nur geringe Werte aufweisen. Auch dies führt zu einer Verminderung der Schneidleistung gegenüber dem Verzahnen von Außenverzahnungen.

Der Erfindung liegt die Aufgabe zugrunde, die Leistung der gattungsgemäßen Vorrichtung bzw. des gattungsgemäßen Verfahrens zu steigern und hierzu das geeignete Schälrad anzugeben.

Gelöst wird die Aufgabe durch die in den Ansprüchen angegebene Erfindung.

Wesentlich ist eine besondere Weiterbildung des Schälrades und dessen Einsatz auf einer Werkzeugmaschine bzw. in einem Verzahnungsverfahren. Erfindungsgemäß ist vorgesehen, dass an zumindest einer Position der regulären Zahnteilung ein anders gestalteter Zahn oder gar kein Zahn angeordnet ist. Dort entspricht der minimale Abstand zweier benachbarter gleich gestalteter Zähne einem Mehrfachen, nämlich dem Zweifachen der regulären Zahnteilung. Ansonsten besitzt das Schälrad zahnradartig angeordnete Schneidzähne, die wie beim bekannten Schälrad an Positionen liegen, die in eine Zahnlücke des Werkrades eingreifen. Der Abstand zumindest einiger unmittelbar benachbarter Schneidzähne entspricht einem Mehrfachen, also mindestens dem Zweifachen, des Zahnabstandes der zu fertigenden Verzahnung. Dies wird in einfacher Weise dadurch verwirklicht, dass einzelne Zähne weggelassen werden. Bevorzugt sind die verbliebenen Zähne bzw. die Zahnlücken in periodisch wiederkehrenden Intervallen in Umfangsrichtung angeordnet. Das Werkzeug besitzt somit eine periodisch verringerte Zähnezahl. Je nach vorgegebener Gesetzmäßigkeit kann aus der regulären Zahnteilung jeder zweite oder jeder dritte Zahn weggelassen werden. Es ist aber auch vorgesehen, dass jeweils zwei Folgezähne weggelassen werden, so dass benachbarte Schneidzähne um das Dreifache des Zahnabstandes der zu fertigenden Verzahnung, die der regulären Zahnteilung des gattungsgemäßen Werkzeuges entspricht. Die Wahl des Werkzeuges bzw. die Orte der fehlenden Zähne werden abhängig von der Anzahl der Zähne des zu verzahnenden Werkstücks gewährt. Besitzt das zu verzahnende Werkstück bspw. eine ungerade Anzahl von Zähnen, so kann das Werkzeug eine geradzahlige Anzahl von Zahnpositionen besitzen, wobei nur jede zweite Position mit einem Zahn besetzt ist, so dass die Zähne um das Doppelte des Zahnabstandes der regulären Zahnteilung voneinander beabstandet sind. Zufolge dieser Ausgestaltung des Schälrades können zur Fertigung einer Innenverzahnung Schälräder mit einem relativ großen Durchmesser verwendet werden. Wegen der fehlenden Zähne vermindert sich der wirksame Überdeckungsbereich. Es ist jedoch sichergestellt, dass sich während der kontinuierlichen Schälbearbeitung immer ein Zahn im Zahneingriff mit dem Werkstück befindet. Der relativ große Durchmesser des Schälrades hat zudem zur Folge, dass die Achse des Schälrades eine maximale Beabstandung zur Innenwandung des rohrförmigen Werkstücks besitzt. Als Folge dessen können relativ hohe Achskreuzwinkel gewählt werden, ohne dass es zu einer Kollision kommt. Der Durchmesser der Werkzeugspindel kann zwar in einem Bereich vermindert sein, um die erforderliche axiale Eindringtiefe zu erreichen. Es verbleibt aber ein Schaftdurchmesser von ausreichender Größe. Die DE 199 33 137 A1 beschreibt zwar bereits ein zahnradförmiges Werkzeug, bei dem unterschiedlich gestaltete Zähne nebeneinander liegen. Dieses Werkzeug ist aber kein Schälrad. Die Schneidkanten verlaufen hier nicht entlang der Konturlinie der Zähne, also in einer Breitseitenebene, sondern parallel zur Achsrichtung, da beim dort beschriebenen Hinterlegen die Zustellung in Radialrichtung und nicht wie beim Schälen in Achsrichtung erfolgt. Bei dem erfindungsgemäßen Wälzschälverfahren handelt es sich um ein kontinuierliches Verzahnverfahren, welches kinematisch zwischen dem Wälzfräsen und dem Wälzstoßen liegt. Während das Wälzstoßen der Getriebekinematik eines Stirnantriebes ähnelt, ähnelt das Wälzschälen kinematisch einem Schraubenradgetriebe. Mit dem Wälzschälen lassen sich verschiedenartige Verzahnungen herstellen. Die Werkstückachse und die Werkzeugachse sind windschief zueinander angeordnet. Mit dem erfindungsgemäßen Verfahren können durch eine rein axiale Vorschubbewegung geradverzahnte Werkstücke hergestellt werden. Ist der Linearverlagerung bspw. der Werkstückspindel eine Phasenlagenveränderung abhängig von der Axialposition überlagert, so können auch schräg verzahnte Werkstücke hergestellt werden. Mit dem erfindungsgemäßen Verfahren kann in die kreisrunde Höhlung eines Rohlings eine Verzahnung eingearbeitet werden, wobei das Werkstück und das Werkzeug in einem Synchronlauf in einem festen Drehzahlverhältnis jeweils von einem Antriebsmotor, bei dem es sich um einen Torquemotor handeln kann, drehangetrieben werden. Das Schälrad greift mit seinen radial abragenden, an seinen zur Breitseite hinweisenden Stirnflächen Schneidkanten aufweisenden Schneidzähnen in den Werkstoff des Werkstückes ein. Wegen des Achskreuzwinkels zwischen Werkstückachse und Werkzeugachse vollzieht jeder in den Werkstückeingriff tretende Schälzahn eine relative Axialverlagerung innerhalb des Werkstücks und trägt dabei einen Schälspan ab. In dem Bereich, in dem erfindungsgemäß ein oder mehrere Schneidzähne am Schälrad fehlen, tritt kein Schälzahn in das Werkstück ein. Die diesbezügliche Zahnlücke des Werkstücks wird in dieser Bearbeitungsphase nicht verlängert. Die Anzahl der einem sich periodisch wiederkehrenden Intervall zugeordneten Schneidzähne ist so gewählt, dass diese Anzahl kein Teiler der Anzahl der Zähne der zu fertigenden Verzahnung ist. Bei einer der folgenden Umdrehungen des Werkstücks wird somit die nicht bearbeitete Zahnlücke verlängert.

Die erfindungsgemäße Lehre, dass der Abstand zumindest einiger gleich gestalteter Zähne des Schälrades einem Mehrfachen der regulären Zahnteilung entspricht, kann nicht nur dadurch verwirklicht werden, dass einige Positionen der regulären Zahnteilung zahnfrei sind. Es ist auch vorgesehen, dass zwischen den beabstandeten, gleich gestalteten Zähne anders gestaltete Zähne angeordnet sind. Auch hier ist vorgesehen, dass die Schneidzähne in periodisch wiederkehrenden Intervallen um die Drehachse des Schälrades angeordnet sind. Bei den verschieden gestalteten Zähnen kann es sich um Schruppzähne einerseits und Schlichtzähne andererseits handeln. Ebenfalls ist es möglich, dass die unterschiedlich gestalteten Zähne eine Vorschneidfunktion und eine Hauptschneidfunktion ausbilden. Hierzu können die Zahnkanten der voneinander verschieden gestalteten Zähne auch in Achsrichtung des Schälrades voneinander beabstandet sein. Mit dem erfindungsgemäßen Verfahren bzw. der erfindungsgemäßen Vorrichtung lassen sich auch Zähne mit im Zahngrund angeordneten Protuberanzen fertigen. Zwischen jeweils einem Hauptschneidzahn liegt dann jeweils ein Protuberanzzahn. Der Protuberanzzahn besitzt eine größere Zahnlänge, ist aber schmaler gestaltet, als der Hauptzahn.

Ein Ausführungsbeispiel der Erfindung wird nachfolgend anhand beigefügter Zeichnungen erläutert. Es zeigen:
- Fig. 1: in einer Längsschnittdarstellung ein auf einer Werkzeugspindel 2 sitzendes Schälrad 4, welches die Innenverzahnung 5 eines auf einer Werkstückspindel 1 sitzendes Werkrad 3 erzeugt,
- Fig. 2: eine perspektivische Stirnseitenansicht eines Werkrades 3 mit in Zahneingriff befindlichem Schälrad,
- Fig. 3: eine Darstellung gemäß Fig. 2, wobei sich das Schälrad und das Werkrad geringfügig verdreht haben und
- Fig. 4: ein weiteres Ausführungsbeispiel eines Schälrades 4.

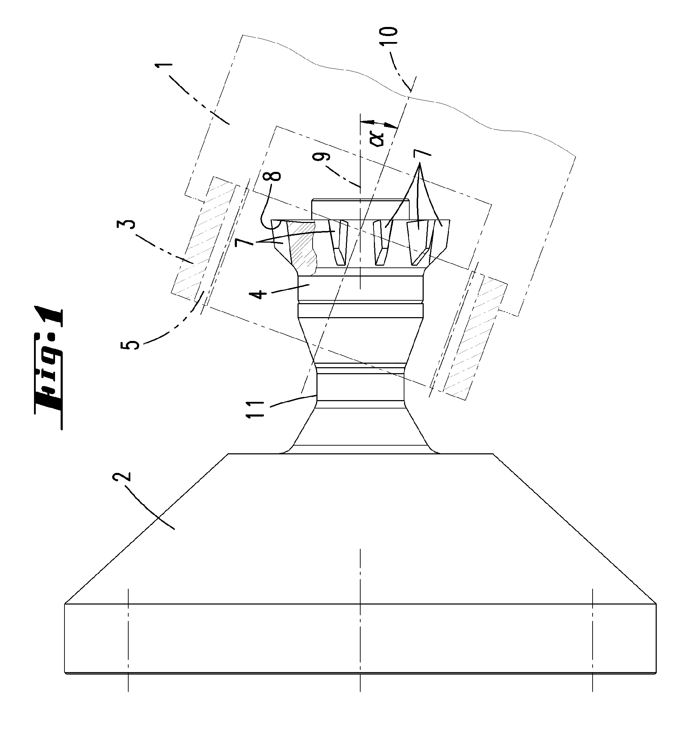

In der Fig. 1 befinden sich die Zähne 7 des Schälrades 4 in Eingriffsstellung in die Verzahnung 5 des Werkrades 3. Das Schälrad 4 besitzt dort seine tiefste axiale Eingriffsstellung. Die Werkzeugspindel 2 braucht in einem Halsbereich 11 nur geringfügig vermindert zu sein, um eine Kollision mit dem Rand des Werkrades 3 zu vermeiden.

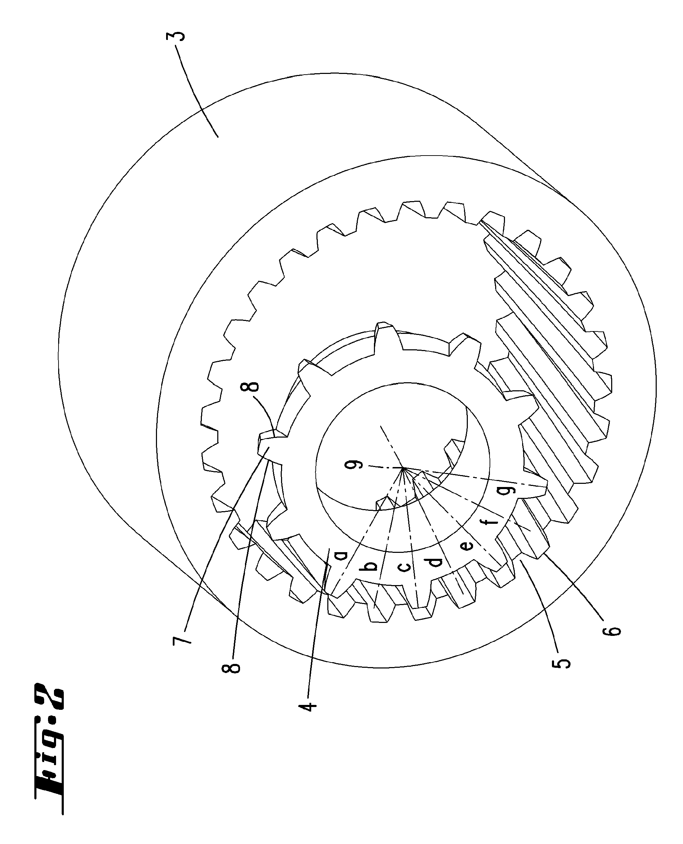

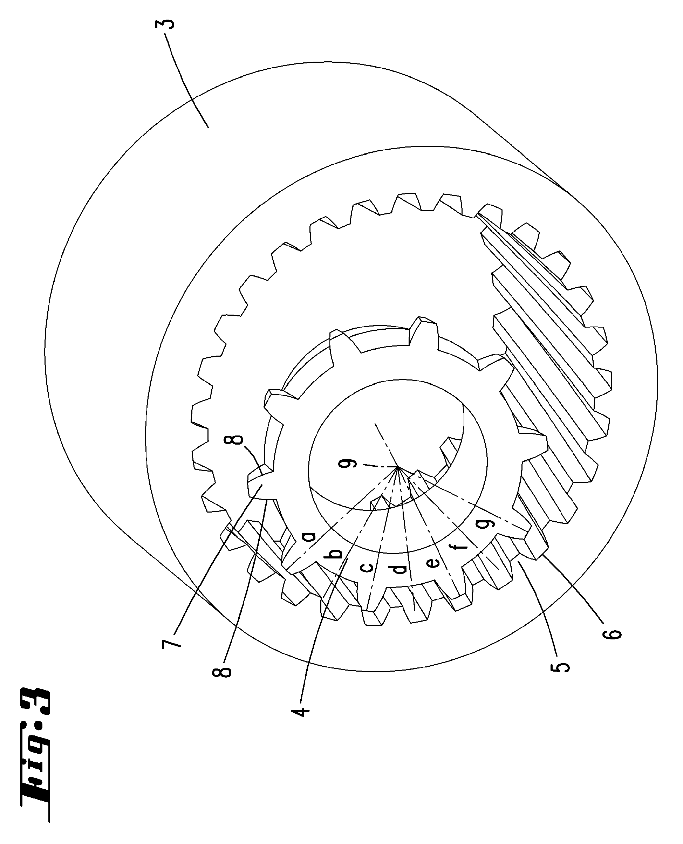

Aus den Figuren 2 und 3 geht hervor, dass sich immer ein Schälzahn 7 des Schälrades 4 im Eingriff in eine Zahnlücke 6 zwischen zwei Zähnen 5 des Werkrades 3 befindet. In der in Fig. 2 dargestellten Position befinden sich die an den Positionen c und e befindlichen Zähnen 7 des Schälrades 4 in einer Eingriffsposition. In der Fig. 3 befindet sich der an der Position e vorgesehene Schälzahn 7 in seiner tiefsten Eingriffsposition in der Zahnlücke 6 des Werkrades 3. Gegenüber dem Stand der Technik ist die Anzahl der sich gleichzeitig in Eingriff befindlichen Zähne 7, 5 vermindert.

Obwohl jede Zahnlücke 6 nur bei jeder zweiten Umdrehung des Werkrades 3 bearbeitet wird, stellt sich eine sehr hohe Maßhaltigkeit ein.

Eine Werkstückspindel 1, die von einem Elektromotor drehangetrieben wird, und die in ihrer Achsrichtung zum Zwecke des Vorschubs verlagerbar ist, trägt ein Werkrad 3, welches eine Rohrform besitzt, also hohl ist, und welches mit einer Innenverzahnung versehen werden soll.

Eine Werkstückspindel 2, die ebenfalls von einem Elektromotor angetrieben wird, trägt ein Schälrad 4. Das Schälrad 4 besitzt die Form eines Zahnrades mit radial nach außen ragenden Schälzähnen 7, die Schneidkanten 8 aufweisen.

Mit einer nicht dargestellten elektronischen Steuerung werden Werkstückspindel 1 und Werkzeugspindel 2 im Gleichlauf angetrieben. Während der Schälbewegung tauchen die Schälzähne 7 des Schälrades 4 in die Innenwandung des rohrförmigen Werkrades 3 ein, um dort eine Innenverzahnung herauszuschälen. Der Abstand der zu fertigenden Zahnlücken 6 bzw. der verbliebenen Zähne 5 des Werkrades 3 entspricht dabei im Wesentlichen der Zahnteilung des Schälrades 4, die durch von dessen Zentrum 9 ausgehende Linien a, b, c, d, f, g dargestellt ist.

Zur Erzeugung der in Achsrichtung gerichteten Schälbewegung stehen die Achsen 10 der Werkstückspindel 1 und die Achse 9 der Werkzeugspindel 2 in einem festen Achskreuzwinkel α zueinander. Durch axiale Verlagerung des Werkrades 3 in Richtung seiner Achse 10 wird ein Vorschub erzeugt.

Beim Ausführungsbeispiel ist nur jede zweite Zahnposition a, c, e, g des Schälrades 4 mit einem Schälzahn 7 mit zwei Schneidkanten 8 belegt. Zwei einander benachbarte Schälzähne 7 besitzen somit den doppelten Abstand der Zahnteilung bzw. den doppelten Abstand des Zahnabstandes der Verzahnung des Werkrades 3.

Es befindet sich somit beim Wälzschälen nur in jeder zweiten zu fertigenden Zahnlücke 6 ein Schneidzahn 7, da auf den Positionen b, d, f kein Zahn vorhanden ist. Da das Werkrad eine ungeradzahlige Zähnezahl besitzt, wird bei jedem zweiten Umlauf jede Zahnlücke 6 bearbeitet.

In nicht dargestellten Ausführungsbeispielen sind andere Zahnkombinationen möglich. Besitzt das Werkrad 3 beispielsweise eine gerade Zähnezahl, so besitzt das Schälrad 4 eine ungerade, beispielsweise durch Drei teilbare Zähnezahl. Dabei kann jeder dritte Zahn fehlen. Es ist aber auch vorgesehen, dass jeweils zwei hintereinander folgende Zahnpositionen nicht mit Zähnen besetzt sind, so dass zwei in Umfangsrichtung unmittelbar einander benachbarte Zähne um das Doppelte des Zahnabstandes voneinander beabstandet sind.

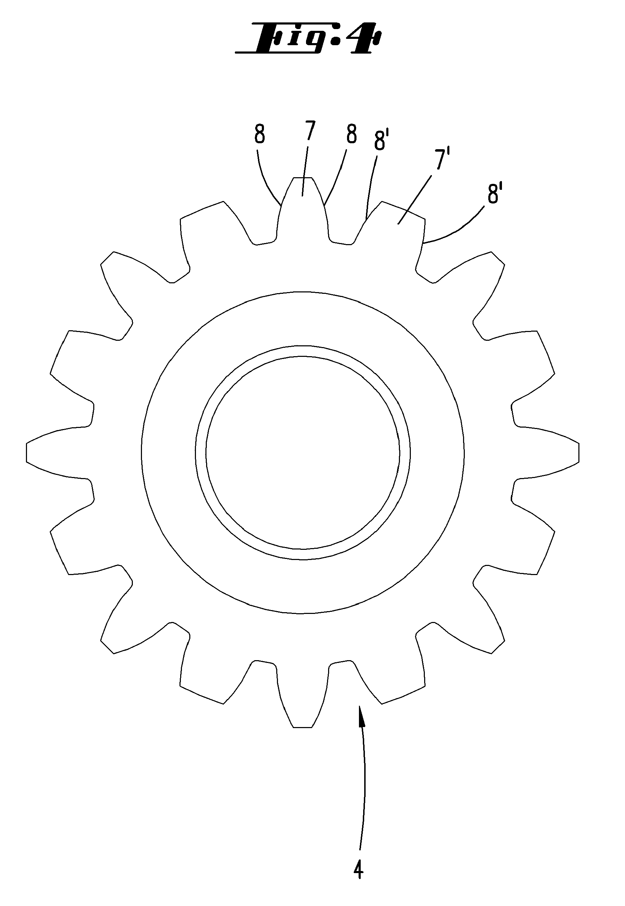

Das in der Fig. 4 dargestellte Schälrad besitzt auf jeder Position der Zahnteilung Schneidzähne 7, 7'. Nebeneinander liegende Schälzähne 7, 7' mit einer gleichen Gestalt, also Umrisskontur der Schneidkante 8, 8' liegen aber um das Zweifache der regulären Zahnteilung voneinander beabstandet. Der Schälzahn 7 bildet einen Protuberanzzahn aus. Der Schneidzahn 7' bildet einen Hauptschneidzahn aus. Die in Radialrichtung bezogen auf das Schälrad 4 gemessene Länge des Protuberanzzahnes 7 ist größer als die Länge des Hauptschneidzahnes 7'. Der in Umfangsrichtung gemessene Abstand der beiden Schneidkanten 8 des Protuberanzzahnes 7 ist dagegen geringer als der in Umfangsrichtung gemessene Abstand der Schneidkanten 8', 8' des Hauptschneidzahnes 7'.

Die Verwendung des in Fig. 4 dargestellten Schälrades 4 auf einer erfindungsgemäßen Vorrichtung bzw. bei einem erfindungsgemäßen Verfahren führt zur Fertigung von Protuberanzen aufweisenden Zähnen einer Verzahnung, insbesondere Innenverzahnung.

Auch hier wird bei der Auslegung des Werkzeuges die Zähnezahl, d.h. die reguläre Zahnteilung, so gewählt, dass der größte gemeinsame Teiler von Anzahl der Zähne des zu fertigenden Werkstücks und Anzahl der Zähne des Schälrades Eins beträgt.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

## Patentansprüche

1. Vorrichtung zum Verzahnen von Werkrädern (3) durch Wälzschälen mit einer drehantreibbaren Werkstückspindel (1) zur Aufnahme des insbesondere innen zu verzahnenden Werkrades (3) und mit einer drehantreibbaren Werkzeugspindel (2), die ein Schälrad (4) trägt, welches eine reguläre Zahnteilung aufweist, durch welche der Zahnabstand der Verzahnung des Werkrades (3) festgelegt ist, **dadurch gekennzeichnet, dass** der Abstand zumindest einiger gleichgestalteter Zähne des Schälrades (4) einem Mehrfachen der regulären Zahnteilung entspricht.

2. Verfahren zum Verzahnen von Werkrädern durch Wälzschälen, bei dem eine Werkstückspindel (1), die ein insbesondere innen zu verzahnendes Werkrad (3) aufnimmt, drehangetrieben wird und bei dem eine Werkzeugspindel, die ein Schälrad (4) trägt, in einem festen Drehzahlverhältnis zur Werkstückspindel (1) drehangetrieben wird, und bei dem das Schälrad (4), welches eine reguläre Zahnteilung aufweist, durch welche der Zahnabstand der Verzahnung des Werkrades (3) festgelegt ist, in Achsrichtung des Werkrades (3) durch eine Relativbewegung von Werkzeugspindel (2) zu Werkstückspindel (1) vorgeschoben wird, **dadurch gekennzeichnet, dass** ein Schälrad (4) verwendet wird, bei dem der Abstand zumindest einiger gleichgestalteter Zähne des Schälrades (4) einem Mehrfachen der regulären Zahnteilung entspricht.

3. Schälrad (4), welches eine reguläre Zahnteilung aufweist, durch welche der Zahnabstand der Verzahnung eines zu verzahnenden Werkrades (3) festgelegt ist, mit einer Vielzahl von um eine Drehachse (9) jeweils an einer durch die Zahnteilung festgelegten Position angeordneten Schneidzähnen (7), die jeweils Schneidkanten (8) aufweisen, **dadurch gekennzeichnet, dass** der Abstand zumindest einiger gleich gestalteter Zähne des Schälrades (4) einem Mehrfachen der regulären Zahnteilung entspricht.

4. Vorrichtung, Verfahren oder Schälrad nach einem oder mehreren der vorhergehenden Ansprüche, **dadurch gekennzeichnet, dass** das Schälrad (4) an einigen durch die Zahnteilung festgelegten Positionen keinen Zahn trägt.

5. Vorrichtung, Verfahren oder Schälrad nach einem oder mehreren der vorhergehenden Ansprüche, **dadurch gekennzeichnet, dass** zwischen gleich gestalteten Zähnen des Schälrades (4) anders gestaltete Zähne angeordnet sind.

6. Vorrichtung, Verfahren oder Schälrad nach einem oder mehreren der vorhergehenden Ansprüche, **dadurch gekennzeichnet, dass** die Schneidzähne in periodisch wiederkehrenden Intervallen um die Drehachse (9) des Schneidrades (4) angeordnet sind.

7. Vorrichtung, Verfahren oder Schälrad nach einem oder mehreren der vorhergehenden Ansprüche, **dadurch gekennzeichnet, dass** jeder Zahn (2) um ein Mehrfaches des Zahnabstandes von seinem Nachbarzahn (7) beabstandet ist.

8. Vorrichtung, Verfahren oder Schälrad nach einem oder mehreren der vorhergehenden Ansprüche, **dadurch gekennzeichnet, dass** jeder Zahn (7) um das Zweifache des Zahnabstandes von seinem Nachbarzahn (7) beabstandet ist.

9. Vorrichtung, Verfahren oder Schälrad nach einem oder mehreren der vorhergehenden Ansprüche, **dadurch gekennzeichnet, dass** der größte gemeinsame Teiler der Anzahl der Zähne des Schälrades (4) und der Anzahl der zu fertigenden Zähne des Werkrades (3) Eins ist.
